# EUROPEAN PATENT SPECIFICATION

(11) **EP 2 945 138 B1**
(45) Date of publication and mention of the grant of the patent: **17.01.2018**
(21) Application number: 14465508.1
(22) Date of filing: 15.05.2014
(51) Int. Cl.: G08G 1/16, G08G 1/0962

(54) **Method and apparatus for providing information data about entities along a route taken by a vehicle**
Verfahren und Vorrichtung zur Bereitstellung von Informationsdaten über Einheiten entlang einer Fahrstrecke eines Fahrzeugs
Procédé et appareil de fourniture de données d'informations sur des entités le long d'un trajet emprunté par un véhicule

(43) Date of publication of application: 18.11.2015
(73) Proprietor: Continental Automotive GmbH, 30165 Hannover (DE)
(72) Inventor: Neda, Codrin, 307200 Ghiroda (RO)
(74) Representative: Büchner, Jörg

(56) References cited:
- DE-A1-102005 033 641
- DE-A1-102012 201 724
- US-A1- 2012 288 138

## Description

The invention relates to a method and apparatus for providing information data about entities along a route taken by a vehicle and in particular information data about static entities of interest along or on roads of the route taken by the vehicle.

Vehicles such as a car can comprise a driver assistance system supporting the driver in many situations such as driving manoeuvres. For example for orientation of the driver it is helpful to display static entities along a road on which the vehicle does move. Moreover, it can be helpful that the driver or a passenger of the vehicle receives additional information about some static entities of interest along a vehicle's driving route. The static entities are detected by a detection unit of the driver assistance system and can comprise sensors of different kind. For instance, the detection unit of a conventional driver assistance system can comprise a camera generating images of the vehicle's surrounding. In another example the static entities are not necessary used to display information to the driver, e.g. the output of Lane Detection might be used to keep the car in the middle of the lane without any interaction with the driver.

Further, in a conventional system, the detection of static entities of interest along a route taken by the vehicle can be prohibited or deteriorated by degraded environmental conditions. These degraded environmental conditions can for instance be impaired illumination conditions of the surrounding due to bad weather or occlusion such as snowfall. In conventional driver assistance systems, complex algorithms are implemented to improve the detection of entities due to degraded environmental conditions. However, these complex algorithms require significant computation resources. Moreover, the complexity of the algorithms increases the processing time for processing the received sensor data of the detection unit. If the sensor data of the driver assistance system has to be processed in real time, the complexity of the sensor data processing can require too much time and cause undesired delays. If the detection of entities takes too long, the detection results cannot be used by the driver assistance system.

Document US 2012 / 0 288 138 A1 discloses detecting traffic related objects based on previously detected object knowledge and imaging.

Document DE 10 2005 033 641 A1 discloses adapting the displaying of road markings depending on the quality of the detection of the road markings.

Document DE 10 2012 201 724 A1 discloses detecting road signs based on road sign information stored in navigation system map.

Accordingly, it is an object of the present invention to provide an apparatus and method for providing information data about entities along a road taken by a vehicle which overcome the above-mentioned problems and which provide information data with a minimum time delay and minimal computation resources consumption.

This object is achieved by a driver assistance system comprising the features of claim 1.

In a possible embodiment of the driver assistance system according to the first aspect of the present invention, the detection unit of the vehicle is adapted to detect markers as static entities along or on roads of the route taken by the vehicle during normal environmental conditions.

In a still further possible embodiment of the driver assistance system according to the first aspect of the present invention, the detected markers comprise traffic signs and/or lane markings along or on roads of the route taken by the vehicle.

In a still further possible embodiment of the driver assistance system according to the first aspect of the present invention, position data of the detected static entities are provided by a navigation system of the vehicle and stored in a map along with the information data of the detected static entities in the memory of the driver assistance system.

In a still further possible embodiment of the driver assistance system according to the first aspect of the present invention, the map is updated each time the vehicle takes the same route.

In a still further possible embodiment of the driver assistance system according to the first aspect of the present invention, a data processing unit is adapted to identify the routes most frequently taken by the vehicle.

In a still further possible embodiment of the driver assistance system according to the first aspect of the present invention, information data about static entities along routes rarely taken by the vehicle or data concerning the entire route are deleted automatically to save storage capacity of the memory.

In a still further possible embodiment of the driver assistance system according to the first aspect of the present invention, the detection unit is adapted to differentiate the detected markers as good markers which are also detectable under degraded environmental conditions and bad markers which are not detectable under degraded environmental conditions.

In a still further possible embodiment of the driver assistance system according to the first aspect of the present invention, only information data about bad markers is stored in the memory to save storage capacity of the memory.

In a still further possible embodiment of the driver assistance system according to the first aspect of the present invention, the information data stored in the memory is used by the driver assistance system for data processing, if a deterioration of the environmental conditions, in particular environmental illumination or occlusion, occurs or is detected by the driver assistance system.

In a still further possible embodiment of the driver assistance system according to the first aspect of the present invention, the memory of the system is a non-volatile memory.

The invention further provides according to a second aspect a method for providing information data about entities along a route taken by a vehicle comprising the features of claim 12.

Accordingly, the invention provides a method for providing information data about entities along a route taken by a vehicle comprising the steps of:
detecting under normal environmental conditions entities of interest along a route taken by the vehicle,
storing information data about the detected entities along the route, and
using the stored information data, if the vehicle moves along the same route and the entities along the route are not detectable due to degraded environmental conditions.

Possible embodiments of the method according to the second aspect of the present invention are indicated in the respective subclaims.

In the following, possible embodiments of the different aspects of the present invention are described in more detail with reference to the enclosed figures.
- Figure 1: shows a block diagram of a possible embodiment of a driver assistance system according to the first aspect of the present invention;
- Figure 2: shows a schematic diagram of a portion of an exemplary route taken by a vehicle for illustrating the operation of the apparatus and method for providing information data about entities along a route taken by a vehicle according to the first and second aspect of the present invention;
- Figure 3: shows a flowchart of a possible exemplary embodiment of a method for providing information data about entities along a route taken by a vehicle according to the second aspect of the present invention.

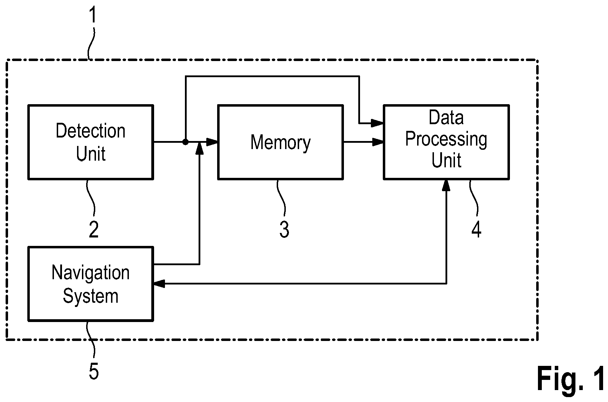

As can be seen in Figure 1, a driver assistance system 1 of a vehicle V comprises in the exemplary embodiment shown in Figure 1 several components. The driver assistance system 1 comprises a detection unit 2 adapted to detect under normal environmental conditions static entities of interest along a route taken by the vehicle V. The detection unit 2 can comprise one or several sensors providing different types of sensor data of the vehicle's surrounding. These sensors can comprise optical sensors providing image data to an imager. Further, the sensors can comprise radar and/or Lidar sensors for generating sensor data which can be processed to detect static entities along a route taken by the vehicle V. In a possible embodiment, the detection unit 2 of the vehicle V is adapted to detect markers as static entities along or on roads of the route taken by the vehicle during normal environmental conditions. These detected markers can comprise for instance traffic signs and/or lane markings along or on roads of the route taken by the vehicle V. The detection unit 2 provides information data about the detected static entities. The information data about the detected static entities output by the detection unit 2 are stored in a memory 3 of the driver assistance system 1. In a possible preferred embodiment, the memory 3 is a non-volatile memory. The information data stored in the memory 3 is used by the driver assistance system 1 if the vehicle V moves along the same route and the static entities along the route are not detectable by the detection unit 2 due to impaired or degraded environmental conditions such as heavy rain or snowfall or impaired illumination conditions. In the exemplary embodiment of the driver assistance system 1 as illustrated in Figure 1, the driver assistance system 1 comprises a data processing unit 4 which is adapted to process data received from the detection unit 2 and/or data read from the memory 3 as illustrated in Figure 1. The data processing unit 4 can comprise one or several microprocessors adapted to perform data processing programmes processing the received data. In the embodiment shown in Figure 1, the data processing unit 4 is further connected to a navigation system 5 of the vehicle V. The navigation system 5 of the vehicle V is adapted to provide position data of the detected entities and store the position data along with the information data of the detected entities in the memory 3 of the driver assistance system 1. Position data of detected static entities are provided by the navigation system 5 of the vehicle V and stored in a map along with the information data of the detected static entities in the non-volatile memory 3. In a possible embodiment, the stored map is updated each time the vehicle V takes the same route. In a possible embodiment, the map is only updated when a change in the map is detected and there is a high confidence in the detected change. The data processing unit 4 has access to the map stored in the memory 3. In a possible embodiment, the data processing unit 4 is adapted to identify routes most frequently taken by the vehicle V. In a possible embodiment, information data about static entities along the routes rarely taken by the vehicle V are automatically deleted to save storage capacity of the memory 3. Further, it is possible that if a route is rarely taken, the entire data relating to this route is deleted to safe storage capacity of the memory 3.

In a further possible embodiment, the detection unit 2 and/or the data processing unit 4 is adapted to differentiate the detected markers as good markers which are also detectable under degraded environmental conditions and as bad markers which are not detectable under degraded environmental conditions. In a possible embodiment, only information data about bad markers are stored in the memory 3 to save storage capacity of the memory 3. In this embodiment, storage optimisation is performed. All information data about problematic entities are saved in the memory 3. For example, a lane detection system of the vehicle V can save in a possible embodiment only bad markers which are not detectable under degraded environmental conditions. Markers which are classified as good markers are not saved or stored in a possible embodiment, because they can be detected by the detection unit 2 also under degraded environmental conditions, in particular under impaired illumination conditions.

According to the embodiment of the invention, the information data stored in the memory 3 is used by the driver assistance system 1 for data processing, if a deterioration of the environmental conditions occurs or is detected. In a possible embodiment, a sensor of the detection unit 2 can monitor one or several environmental conditions such as impaired illumination or occlusion. If this specific sensor detects a relevant deterioration of the environmental conditions, the data processing unit 4 does use information data stored in the memory 3 for the respective driver assistance function. In a possible embodiment, if no deterioration of the environmental conditions is detected, the data processing unit 4 does not have to use information data stored in the memory 3 and can rely on the sensor data provided by the sensor of the detection unit 2.

In a possible exemplary embodiment, a switching between two operation modes can be performed. In a first operation mode, the data processing unit 4 uses the primary data generated by the detection unit 2 in case that no deterioration of the environmental conditions is present. As soon as a deterioration of the environmental conditions occurs or is detected, the system switches from the normal operation mode to second operation mode, where the data processing unit 4 uses the information data about detected static entities stored in the memory 3 instead of the presumably deteriorated data provided by the detection unit 2, if a significant deterioration of the environmental conditions is detected.

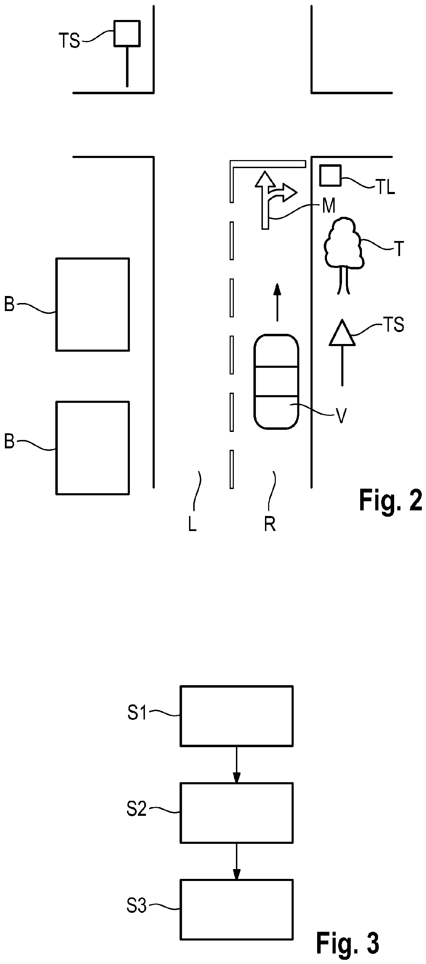

Figure 2 shows a schematic diagram for illustrating the operation of the driver assistance system 1 as shown in Figure 1. The driver assistance system 1 is implemented in a vehicle V moving on the right lane R of a road forming part of a route taken by the vehicle V. In the exemplary traffic situation illustrated in Figure 2, the vehicle V moves along the right lane R of the road towards a traffic light TL. The vehicle V does move along different static entities such as a traffic sign TS, a tree T towards a traffic light TL located on the right side of the road. Moreover, the vehicle V can cross the crossing and move over the traffic marking M on the road which also forms a static entity. On the left side of the road, different buildings B can also form static entities of interest along the route taken by the vehicle V. Figure 2 further shows another traffic sign on the left side of the road crossing indicating for instance a name of a village such as "Hemhausen" along the route of the vehicle V. The information data about the different detected static entities such as the buildings B, traffic signs TS, the tree T, the traffic light TL and/or the marker M can be generated by sensors of the detection unit 2 and stored in the memory 3 for later use. The generation of the information data about the detected static entities is performed under normal environmental conditions, for instance under good weather conditions and during daytime. In many circumstances, the vehicle V will take the same route several times, for instance a worker or employee will take the same route between his home and his working place every working day. In a possible embodiment, the information data about static entities of interest along the route taken by the vehicle V are sampled each time the vehicle V is taking the same route. In a possible embodiment, the quality of the environmental conditions is evaluated and the information data about the detected static entities is updated every time when the classified quality of the environmental conditions is evaluated to be best. Accordingly, if the vehicle V takes the same route during daytime but with not optimal weather conditions, the generated and stored information data about the detected static entities is overwritten in the memory 3 when the vehicle V takes the same route during daytime and very good weather conditions. If the vehicle V then takes the same route during night and/or during very bad weather conditions, the data processing unit 4 cannot use the sensor data provided by the detection unit 2, but it uses the information data about the detected static entities stored in the non-volatile memory 3.

In a possible embodiment, different types of static entities are differentiated such as buildings B, traffic signs TS, or other static entities such as trees T or traffic lights TL. Depending on the type of the detected static entity, different kinds and amount of information data can be stored in the memory 3. The detection unit 2 can detect static entities on or along the road such as lanes, traffic signs, or tar pits and store this information data in the non-volatile memory 3. This information data can be used as a suggestion in case of bad environmental conditions or occlusion. In this way, the driver assistance system 1 builds up a map that contains information data about static entities of interest on each point on the map. A traffic sign system can save detected traffic signs, whereas a lane detection system does save or store lane markings of the road. In a possible embodiment, the detection algorithm is extended such that it saves entities that are detected too late for a real time use. For instance, a tar pit on the road is detected only when the vehicle V does drive over it. This kind of markers can then be saved and stored in the memory 3 for further use, in particular when the vehicle V moves along the same road under bad weather or illumination conditions. The position on the map is obtained in a possible embodiment from the navigation system 5. The stored map can be created or updated by driving a couple of times on the same route. An algorithm can identify the routes that are the most frequently used by the driver. The least used routes can be deleted from the map, if the storage capacity is too small to store all routes. Information data extracted under good environmental conditions can be used by the driver assistance system 1 illustrated in Figure 1 in case of bad illumination and/or occlusion.

In the embodiment shown in Figure 1, the localisation on the map is provided by using a navigation system 5. Other methods can be used to identify the position of a static entity in the map. In a possible embodiment, the position is extracted from the detected scene. Further, it is possible to use previous outputs of existing algorithms. In case of implemented lane detection and traffic sign recognition algorithms, the characteristics of the markers and of the signs can be used to create a kind of signature that can be used in the future to identify the location of the detected static entities and/or the location of the car on the map stored in the memory 3. The detection of the static entities can rely on camera-based algorithms, but also on other algorithms such as radar-based algorithms.

Figure 3 shows a flowchart of an exemplary embodiment of a method for providing information data about entities along a road taken by a vehicle V.

In a first step S1, entities of interest, in particular static entities of interest, are detected under normal environmental conditions along a route taken by the vehicle V. In a possible implementation, it is first detected by a sensor, whether the environmental conditions are not normal or normal. Only if normal environmental conditions are present, in particular good weather conditions and good illumination conditions, the detection of the entities of interest is performed in step S1.

In a further step S2, the information data about the detected entities along the route are stored in a memory 3. In a possible embodiment, the information data is extracted directly from the detected entities such as characters written on a traffic sign TS. In a still further possible embodiment, information data about the detected entities can also be extracted from a database linked via a network and a wireless link to the driver assistance system 1. For instance, information data about a building B along the road can be extracted in a remote database via the wireless link and stored in the memory 3 for further use.

In a further step S3, the information data stored in the memory 3 is used by the driver assistance system 1, if the vehicle V moves along the same route and the entities along the route are not detectable due to degraded environmental conditions.

The driver assistance system 1 as illustrated in Figure 1 and the method for providing information data about entities along the route taken by a vehicle V can be used for different kinds of vehicles, in particular private cars and trucks. Further embodiments are possible. In a possible embodiment, the information data about static entities within the memory 3 also comprise an assigned confidence value depending on the environmental conditions during the time when the information data was extracted or generated. In a preferred embodiment of the method as illustrated in Figure 3, the method steps can be performed in real time.

Throughout this description whenever it is stated that a deterioration of the environmental conditions is detected it should be understood that detecting can also be a passive detecting. In such a case the detection unit 2 provides an output containing the detected entities and a detection confidence. In case of Lane Detection the output consists of the detected left and right markers and the detection confidence. In case of bad illumination or occlusion one marker might not be detected at all and the other might have a small confidence. Consequently, there is no need to detect deterioration of the environment condition. The "detection" occurs implicitly if no static entity is detected where under normal environment conditions the static entity would have been detected or a static entity is detected for example with a small confidence. For example, according to the present invention the lane markers are saved when there is a high confidence in detection and the saved information is used when there is no detection or there is detection with small confidence.

## Claims

1. A driver assistance system (1) of a vehicle (V) comprising
a detection unit (2) adapted to detect under normal environmental conditions static entities of interest along a route taken by said vehicle (V);
a memory (3) adapted to store information data about the detected static entities,
wherein the information data stored in the memory (3) is used by the driver assistance system (1) when the vehicle (V) moves along the same route and the static entities along the route are not detectable due to degraded environmental conditions;
wherein the detection unit (2) of the vehicle (V) is adapted to detect markers as static entities along or on roads of the route taken by the vehicle (V) during normal environmental conditions; and
wherein the detection unit (2) is adapted to differentiate the detected markers as good markers which are also detectable under degraded environmental conditions and bad markers which are not detectable under degraded environmental conditions.

2. The driver assistance system according to claim 1,
wherein the detected markers comprise traffic signs and/or lane markings along or on roads of the route taken by the vehicle (V).

3. The driver assistance system according to one of the preceding claims 1 to 2,
wherein position data of the detected static entities are provided by a navigation system (5) of the vehicle (V) and stored in a map along with the information data of the detected static entities in the memory (3) of the driver assistance system (1).

4. The driver assistance system according to claim 3,
wherein the stored map is updated each time the vehicle (V) takes the same route.

5. The driver assistance system according to one of the preceding claims 1 to 4,
wherein a data processing unit (4) is adapted to identify the routes most frequently taken by the vehicle (V).

6. The driver assistance system according to claim 5,
wherein information data about static entities along routes rarely taken by the vehicle (V) or the entire route is deleted automatically to save storage capacity of the memory (3).

7. The driver assistance system according to claim 1,
wherein only information data about bad markers is stored in the memory (3) to save storage capacity of the memory (3) .

8. The driver assistance system according to one of the preceding claims 1 to 7,
wherein the information data stored in the memory (3) is used by the driver assistance system (1) for data processing, if a deterioration of the environmental conditions, in particular environmental illumination or occlusion, occurs and/or is detected by the driver assistance system (1).

9. The driver assistance system according to one of the preceding claims 1 to 8,
wherein the memory (3) is a non-volatile memory.

10. A method for providing information data about entities along a route taken by a vehicle (V) comprising the steps of:
(a) detecting under normal environmental conditions entities of interest along a route taken by the vehicle (V) ;
(b) storing information data about the detected entities along the route; and
(c) using the stored information data, if the vehicle (V) moves along the same route and the entities along the route are not detectable due to degraded environmental conditions;
wherein markers are detected as static entities along or on a road of the route taken by the vehicle (V) during normal environmental conditions, wherein the detected markers comprise traffic signs and/or lane markings along or on roads of the route taken by the vehicle (V); and wherein the detected markers are differentiated as good markers which are also detectable under degraded environmental conditions and bad markers which are not detectable under degraded environmental conditions.

11. The method according to claim 10,
wherein position data of the detected static entities are stored in a map along with information of the detected static entities in a memory (3).

12. The method according to one of the preceding claims 10 to 11,
wherein routes most frequently taken by the vehicle (V) are identified and wherein information data about static entities along routes rarely taken by the vehicle (V) or the entire route is deleted automatically to save storage capacity of the memory (3).

## Patentansprüche

1. Fahrerassistenzsystem (1) eines Fahrzeugs (V), umfassend
eine Detektionseinheit (2), die dazu angepasst ist, interessierende statische Einheiten entlang einer durch das Fahrzeug (V) benutzten Strecke unter normalen Umgebungsbedingungen zu detektieren;
einen Speicher (3), der dazu angepasst ist, Informationsdaten über die detektierten statischen Einheiten zu speichern,
wobei die im Speicher (3) gespeicherten Informationsdaten durch das Fahrerassistenzsystem (1) genutzt werden, wenn sich das Fahrzeug (V) entlang derselben Strecke bewegt und die statischen Einheiten entlang der Strecke aufgrund verschlechterter Umgebungsbedingungen nicht detektierbar sind;
wobei die Detektionseinheit (2) des Fahrzeugs (V) dazu angepasst ist, Markierungen als statische Einheiten entlang oder auf Straßen der durch das Fahrzeug (V) benutzten Strecke unter normalen Umgebungsbedingungen zu detektieren; und
wobei die Detektionseinheit (2) dazu angepasst ist, detektierte Markierungen in gute Markierungen, die auch unter verschlechterten Umgebungsbedingungen detektierbar sind, und schlechte Markierungen, die unter verschlechterten Umgebungsbedingungen nicht detektierbar sind, zu unterscheiden.

2. Fahrerassistenzsystem nach Anspruch 1, wobei die detektierten Markierungen Verkehrszeichen und/oder Fahrbahnmarkierungen entlang oder auf Straßen der durch das Fahrzeug (V) benutzten Strecke umfassen.

3. Fahrerassistenzsystem nach einem der vorangehenden Ansprüche 1 bis 2,
wobei Positionsdaten der detektierten statischen Einheiten durch ein Navigationssystem (5) des Fahrzeugs (V) bereitgestellt und in einer Karte zusammen mit den Informationsdaten der detektierten statische Einheiten im Speicher (3) des Fahrerassistenzsystems (1) gespeichert werden.

4. Fahrerassistenzsystem nach Anspruch 3, wobei die gespeicherte Karte aktualisiert wird, wann immer das Fahrzeug (V) dieselbe Strecke benutzt.

5. Fahrerassistenzsystem nach einem der vorangehenden Ansprüche 1 bis 4,
wobei eine Datenverarbeitungseinheit (4) dazu angepasst ist, die durch das Fahrzeug (V) am häufigsten benutzten Strecken zu identifizieren.

6. Fahrerassistenzsystem nach Anspruch 5, wobei Informationsdaten über statische Einheiten entlang von durch das Fahrzeug (V) selten benutzten Strecken oder die gesamte Strecke automatisch gelöscht werden, um Speicherkapazität des Speichers (3) zu sparen.

7. Fahrerassistenzsystem nach Anspruch 1,
wobei nur Informationsdaten über schlechte Markierungen im Speicher (3) gespeichert werden, um Speicherkapazität des Speichers (3) zu sparen.

8. Fahrerassistenzsystem nach einem der vorangehenden Ansprüche 1 bis 7,
wobei die im Speicher (3) gespeicherten Informationsdaten vom Fahrerassistenzsystem (1) zur Datenverarbeitung genutzt werden, wenn eine Verschlechterung der Umgebungsbedingungen, insbesondere der Umgebungsbeleuchtung, oder eine Okklusion eintreten und/oder vom Fahrerassistenzsystem (1) detektiert werden.

9. Fahrerassistenzsystem nach einem der vorangehenden Ansprüche 1 bis 8,
wobei der Speicher (3) ein nichtflüchtiger Speicher ist.

10. Verfahren zum Bereitstellen von Informationsdaten über Einheiten entlang einer durch ein Fahrzeug (V) benutzten Strecke, umfassend folgende Schritte:
(a) Detektieren von interessierenden Einheiten entlang einer durch das Fahrzeug (V) benutzten Strecke unter normalen Umgebungsbedingungen;
(b) Speichern von Informationsdaten über die detektierten Einheiten entlang der Strecke und
(c) Nutzen der gespeicherten Informationsdaten, wenn sich das Fahrzeug (V) entlang derselben Strecke bewegt und die Einheiten entlang der Strecke aufgrund verschlechterter Umgebungsbedingungen nicht detektierbar sind;
wobei Markierungen als statische Einheiten entlang oder auf einer Straße der durch das Fahrzeug (V) benutzten Strecke unter normalen Umgebungsbedingungen detektiert werden, wobei die detektierten Markierungen Verkehrszeichen und/oder Fahrbahnmarkierungen entlang oder auf Straßen der durch das Fahrzeug (V) benutzten Strecke umfassen und wobei die detektierten Markierungen in gute Markierungen, die auch unter verschlechterten Umgebungsbedingungen detektierbar sind, und schlechte Markierungen, die unter verschlechterten Umgebungsbedingungen nicht detektierbar sind, unterschieden werden.

11. Verfahren nach Anspruch 10,
wobei Positionsdaten der detektierten statischen Einheiten in einer Karte zusammen mit Informationen der detektierten statischen Einheiten in einem Speicher (3) gespeichert werden.

12. Verfahren nach einem der vorangehenden Ansprüche 10 bis 11, wobei durch das Fahrzeug (V) am häufigsten benutzte Strecken identifiziert werden und wobei Informationsdaten über statische Einheiten entlang von durch das Fahrzeug (V) selten benutzten Strecken oder die gesamte Strecke automatisch gelöscht werden, um Speicherkapazität des Speichers (3) zu sparen.

## Revendications

1. Système d'aide à la conduite (1) d'un véhicule (V), comprenant
une unité de détection (2) adaptée pour détecter, dans des conditions environnementales normales, des entités statiques présentant un intérêt le long d'un parcours emprunté par ledit véhicule (V) ;
une mémoire (3) adaptée pour stocker des données d'information au sujet des entités statiques détectées,
les données d'information stockées dans la mémoire (3) étant utilisées par le système d'aide à la conduite (1) lorsque le véhicule (V) se déplace le long du même parcours et que les entités statiques le long du parcours ne peuvent pas être détectées du fait de conditions environnementales dégradées ;
l'unité de détection (2) du véhicule (V) étant adaptée pour détecter des marqueurs comme entités statiques le long du, ou sur les routes du, parcours emprunté par le véhicule (V) dans des conditions environnementales normales ; et
l'unité de détection (2) étant adaptée pour faire la distinction entre les marqueurs détectés en tant que bons marqueurs, lesquels peuvent également être détectés dans des conditions environnementales dégradées, et en tant que mauvais marqueurs, lesquels ne peuvent pas être détectés dans des conditions environnementales dégradées.

2. Système d'aide à la conduite selon la revendication 1, les marqueurs détectés comprenant des panneaux de signalisation et/ou du marquage routier le long du, ou sur les routes du, parcours emprunté par le véhicule (V).

3. Système d'aide à la conduite selon l'une des revendications précédentes 1 à 2,
les données de position des entités statiques détectées étant fournies par un système de navigation (5) du véhicule (V) et stockées dans une carte avec les données d'information des entités statiques détectées dans la mémoire (3) du système d'aide à la conduite (1).

4. Système d'aide à la conduite selon la revendication 3, la carte stockée étant actualisée à chaque fois que le véhicule (V) emprunte le même parcours.

5. Système d'aide à la conduite selon l'une des revendications précédentes 1 à 4,
une unité de traitement de données (4) étant adaptée pour identifier les parcours les plus fréquemment empruntés par le véhicule (V).

6. Système d'aide à la conduite selon la revendication 5, les données d'information au sujet d'entités statiques le long des parcours rarement empruntés par le véhicule (V) ou l'entier parcours étant effacés automatiquement afin d'économiser la capacité de stockage de la mémoire (3).

7. Système d'aide à la conduite selon la revendication 1, uniquement des données d'information relatives aux mauvais marqueurs étant stockées dans la mémoire (3) afin d'économiser la capacité de stockage de la mémoire (3).

8. Système d'aide à la conduite selon l'une des revendications précédentes 1 à 7,
les données d'information stockées dans la mémoire (3) étant utilisées par le système d'aide à la conduite (1) pour le traitement de données, si une détérioration des conditions environnementales, en particulier due à l'éclairage ambiant ou à une obstruction, se produit et/ou est détectée par le système d'aide à la conduite (1).

9. Système d'aide à la conduite selon l'une des revendications précédentes 1 à 8,
la mémoire (3) étant une mémoire non volatile.

10. Procédé pour fournir des données d'information relatives à des entités le long d'un parcours emprunté par un véhicule (V), comprenant les étapes de :
**(a)** détecter, dans des conditions environnementales normales, des entités présentant un intérêt le long d'un parcours emprunté par le véhicule (V) ;
(b) stocker des données d'information relatives aux entités détectées le long du parcours ; et
(c) utiliser les données d'information stockées, si le véhicule (V) se déplace le long du même parcours et que les entités statiques le long du parcours ne peuvent pas être détectées du fait de conditions environnementales dégradées ;
des marqueurs étant détectés comme entités statiques le long du, ou sur une route du, parcours emprunté par le véhicule (V) dans des conditions environnementales normales, les marqueurs détectés comprenant des panneaux de signalisation et/ou du marquage routier le long du, ou sur des routes du, parcours emprunté par le véhicule (V) ; et les marqueurs détectés étant identifiés comme bons marqueurs, lesquels peuvent également être détectés dans des conditions environnementales dégradées, et comme mauvais marqueurs, lesquels ne peuvent pas être détectés dans des conditions environnementales dégradées.

11. Procédé selon la revendication 10,
les données de position des entités statiques détectées étant stockées dans une carte avec les données d'information des entités statiques détectées dans une mémoire (3).

12. Procédé selon l'une des revendications précédentes 10 à 11, les parcours les plus fréquemment empruntés par le véhicule (V) étant identifiés et des données d'information relatives à des entités statiques le long des parcours rarement empruntés par le véhicule (V) ou l'entier parcours étant effacés automatiquement afin d'économiser la capacité de stockage de la mémoire (3).
